# FASCICULE DE BREVET EUROPEEN

(11) **EP 4 091 873 B1**
(45) Date de publication et mention de la délivrance du brevet: **26.07.2023**
(21) Numéro de dépôt: 22173600.2
(22) Date de dépôt: 16.05.2022
(51) Int. Cl.: B60N 2/24, B60N 2/75, B60N 3/02

(54) **SIÈGE POUR VÉHICULE DE TRANSPORT DE PASSAGERS ET VÉHICULE DE TRANSPORT DE PASSAGERS COMPRENANT UN TEL SIÈGE**
SITZ FÜR EIN PASSAGIERTRANSPORTFAHRZEUG UND PASSAGIERTRANSPORTFAHRZEUG MIT EINEM SOLCHEN SITZ
SEAT FOR PASSENGER TRANSPORT VEHICLE AND PASSENGER TRANSPORT VEHICLE COMPRISING SUCH A SEAT

(30) Priorité: 18.05.2021 FR 2105194
(43) Date de publication de la demande: 23.11.2022
(73) Titulaire: ALSTOM Holdings, 93400 Saint-Ouen-sur-Seine (FR)
(72) Inventeur: GERGAUD, Didier, 17290 Aigrefeuille d'Aunis (FR); LUGOL, Jean-Louis, 17540 Verines (FR); COLLOT, Nicolas, 17139 Dompierre sur Mer (FR)
(74) Mandataire: Lavoix

(56) Documents cités:
- JP-A- H0 761 265

## Description

La présente invention concerne un siège pour véhicule de transport de passagers du type comprenant une assise, un dossier placé au-dessus de l'assise, au moins un accoudoir et au moins une barre de maintien, et un véhicule de transport de passagers comportant un tel siège.

Il est connu d'équiper les véhicules de transport de passagers de barres de maintien pour aider les passagers à s'asseoir, se lever et pour aider les passagers debout à garder leur équilibre. Ces barres sont souvent fixées au sol, ce qui pose des problèmes d'étanchéité du sol, complexifie le nettoyage du véhicule et peut gêner les passagers.

US2470649A décrit, en regard de sa figure 1, une barre de maintien prolongeant un accoudoir. Cette barre de maintien est composée d'une partie verticale, dont l'extrémité haute est fixée au plafond d'un véhicule de transport en commun, et dont l'extrémité inférieure est reliée par un coude à un accoudoir horizontal, l'extrémité de l'accoudoir opposée au coude est fixée sur le côté d'un siège destiné à un passager. La fixation de la barre de maintien sur le siège permet d'éviter tout problème d'étanchéité du sol.

Cependant, la barre de maintien et l'accoudoir ne peuvent pas être dissociés, empêchant l'utilisation d'un accoudoir sans barre de maintien, ou d'une barre de maintien sans accoudoir.

JPH0761265A décrit un siège de véhicule comprenant une assise et un dossier. Une extrémité avant d'un accoudoir et une extrémité basse d'une barre de maintien sont fixés à la structure de l'assise, sous le niveau de l'assise. Pour permettre la fixation de l'accoudoir et de la barre de maintien, la structure de l'assise de ce siège est complexe, et donc onéreuse à fabriquer.

C'est à cet inconvénient qu'entend plus particulièrement remédier l'invention en proposant un siège pour véhicule de transport de passagers comprenant un accoudoir et une barre de maintien pouvant être mis en oeuvre indépendamment l'un de l'autre, et dont la fixation à l'assise est simple.

À cet effet, l'invention a pour objet un siège pour véhicule de transport de passagers du type précité, dans lequel l'accoudoir est fixé à l'assise depuis une extrémité avant sous le niveau de l'assise et dans lequel la barre de maintien est fixée à l'assise depuis une extrémité de liaison à l'assise sous le niveau de l'assise.

Le siège selon l'invention comprend les caractéristiques de la revendication 1.

Grâce à l'invention, il est possible d'installer dans un véhicule de transport de passagers un siège qui comporte une barre de maintien et un accoudoir fixés chacun à l'assise du siège sous le niveau de l'assise et pouvant donc être mis en oeuvre indépendamment l'un de l'autre. En outre, l'attache commune de liaison permet de facilement fixer la barre de maintien et l'accoudoir à l'assise, sans avoir à prévoir des moyens de fixation spécifiques sur l'assise.

Selon des aspects avantageux, mais non obligatoires de l'invention, le siège incorpore une ou plusieurs des caractéristiques suivantes, prises isolément ou selon toutes combinaisons techniquement admissibles :
- L'extrémité de liaison à l'assise de la barre de maintien et l'accoudoir sont en outre fixés l'un à l'autre de manière réversible.
- L'attache commune de liaison forme une bride reliée à l'assise de manière démontable, et l'extrémité avant de l'accoudoir est enserrée entre la bride et l'assise.
- Le siège comporte des moyens de fixation de l'extrémité de liaison à l'assise de la barre de maintien sur l'attache commune de liaison de manière démontable.
- L'extrémité de liaison à l'assise de la barre de maintien et l'attache commune de liaison sont percées d'au moins un trou dans lequel sont engagés les moyens de fixation.
- L'extrémité de liaison à l'assise de la barre de maintien comprend un méplat sur lequel est positionné une patte de l'attache commune de liaison.
- L'attache commune de liaison est fixée à l'assise de manière réversible.
- L'assise du siège comprend un coussin et un support, le coussin est fixé sur le support et au-dessus de celui-ci, l'accoudoir est fixé au support sous le coussin et l'extrémité de liaison à l'assise de la barre de maintien est fixée au support sous le coussin.

Selon un autre aspect, l'invention a aussi pour objet un véhicule de transport de passagers comprenant au moins un siège tel que mentionné ci-dessus.

L'invention sera mieux comprise et d'autres avantages de celle-ci apparaitront plus clairement à la lumière de la description qui va suivre d'un mode de réalisation d'un siège pour véhicule de transport de passagers et d'un véhicule de transport de passagers comprenant un tel siège, donnée uniquement à titre d'exemple et faite en référence aux dessins annexés dans lesquels :
[Fig. 1] La figure 1 est une vue en perspective de l'intérieur d'un véhicule de transport de passagers conforme à l'invention ; et
[Fig. 2] La figure 2 est une vue en perspective du détail II de la figure 1.

Le véhicule de transport de passagers 10 est par exemple un véhicule ferroviaire, tel qu'un tramway ou un train, ou bien un véhicule routier, tel d'un autocar ou un autobus, un véhicule de transport aérien, tel qu'un avion, voire encore un véhicule de transport maritime, tel qu'un paquebot.

Ce véhicule comporte une barre horizontale haute 11, fixée à un plafond non-représenté, et une paroi latérale 13.

Le véhicule 10 comporte également une rangée de sièges 20, qui comprend trois sièges 21, 22 et 23 juxtaposés parallèlement à la paroi 13.

Chaque siège, et notamment le siège 21 comporte une assise 30, qui comprend un coussin 32 fixé sur le dessus d'un support 34. Ce support 34 est fixé à la paroi latérale 13. Dans l'exemple, le support 34 comprend une traverse 36 sur laquelle le coussin 32 est fixé et deux bras de maintien 38, solidaires de la traverse 36 et fixés à la paroi latérale 13. La traverse 36 est commune à tous les sièges de la rangée de sièges 20. Le support 34 est donc situé sous le niveau de l'assise 30.

Le siège 21 comporte également un dossier 40 et un accoudoir 42 disposé à la droite de l'assise 30, entre le siège 21 et le siège 22.

Le siège 21 dispose d'un second accoudoir situé à la gauche de l'assise 30. De plus, deux accoudoirs supplémentaires sont disposés à gauche et à droite de l'assise du siège 23. Ainsi, la rangée de sièges 20 comporte quatre accoudoirs et chaque siège dispose d'un accoudoir sur sa gauche et sur sa droite.

Les dossiers des sièges 21, 22 et 23 sont alignés selon un axe parallèle à la paroi latérale 13. En position assise, le dos du passager est donc tourné vers la paroi latérale.

Le coussin 32 et le dossier 40 forment ensemble une pièce monobloc.

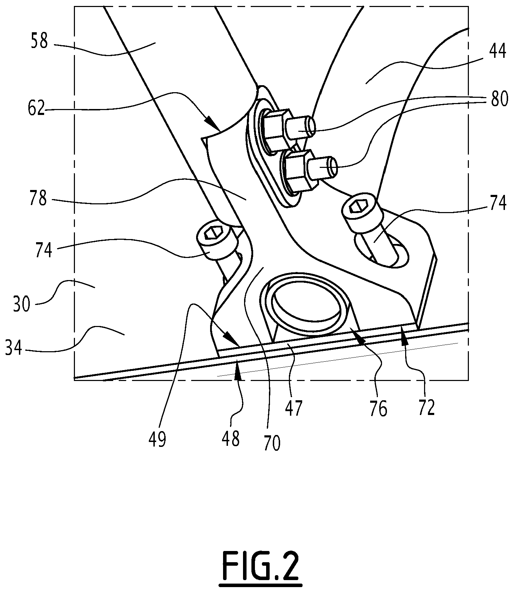

L'accoudoir 42 comporte une extrémité avant 44 fixée au support 34. L'accoudoir 42 comporte également une plaque de fixation 47, visible sur la figure 2. Cette plaque est fixée sur l'extrémité avant 44, par exemple par un assemblage vissé. Cette plaque de fixation comporte une face intérieure 48 et une face extérieure 49. La face intérieure 48 est en contact avec le support 34.

Le siège 21 comporte également une barre de maintien 50, par exemple tubulaire, qui comporte une extrémité haute 52, fixée à la barre horizontale haute 11 à l'aide d'une noix de serrage 54, de manière connue.

La barre de maintien 50 comporte un tronçon vertical principal 56 prolongé dans sa partie basse par un tronçon horizontal 58. Les deux tronçons sont reliés par un coude 60, qui épouse la forme de l'extrémité avant du coussin, le tronçon horizontal se prolongeant sous le coussin. Un méplat 62 est ménagé à l'extrémité du tronçon horizontal 58.

Le siège 21 comporte une attache commune 70 de liaison à la fois de l'extrémité avant 44 de l'accoudoir 42 et du tronçon horizontal 58 de la barre de maintien 50 au support 34, comme représenté à la figure 2. Le tronçon horizontal 58 forme une extrémité de liaison à l'assise de la barre de maintien 50.

L'attache 70 est fixée au support 34 sous le niveau de l'assise 30.

Cette attache commune de liaison 70 forme une bride qui comprend une face d'appui 72 plane, qui est plaquée contre la face extérieure 49 de la plaque de fixation 47 de l'accoudoir. L'attache 70 est maintenue en position contre la plaque de fixation 47 par deux vis 74 vissées dans le support 34, ce qui permet de fixer à la fois la plaque de fixation et l'attache commune de liaison au support. Ces deux vis traversent la plaque de fixation 47 par deux trous non-visibles sur les figures. En variante, d'autres moyens de fixations sont utilisés pour fixer la plaque de fixation et l'attache commune de liaison au support.

Un logement 76 est ménagé dans l'attache 70, sur la face d'appui 72. Ce logement est configuré pour accueillir l'extrémité avant 44 de l'accoudoir 42. Lorsque l'attache 70 est fixée sur le support 34 par les moyens d'attache 74 et maintient la plaque 47, l'extrémité avant 44 de l'accoudoir est maintenue dans le logement 76.

L'attache commune de liaison 70 comprend également une patte 78, complémentaire au méplat 62 du tronçon horizontal de la barre de maintien sur laquelle la patte 78 est maintenue. Le tronçon horizontal 58 est fixé à l'attache commune de liaison. Par exemple, deux boulons 80 traversent le tronçon horizontal 58 de la barre de maintien et la patte 78 par deux trous traversant non-visibles sur les figures.

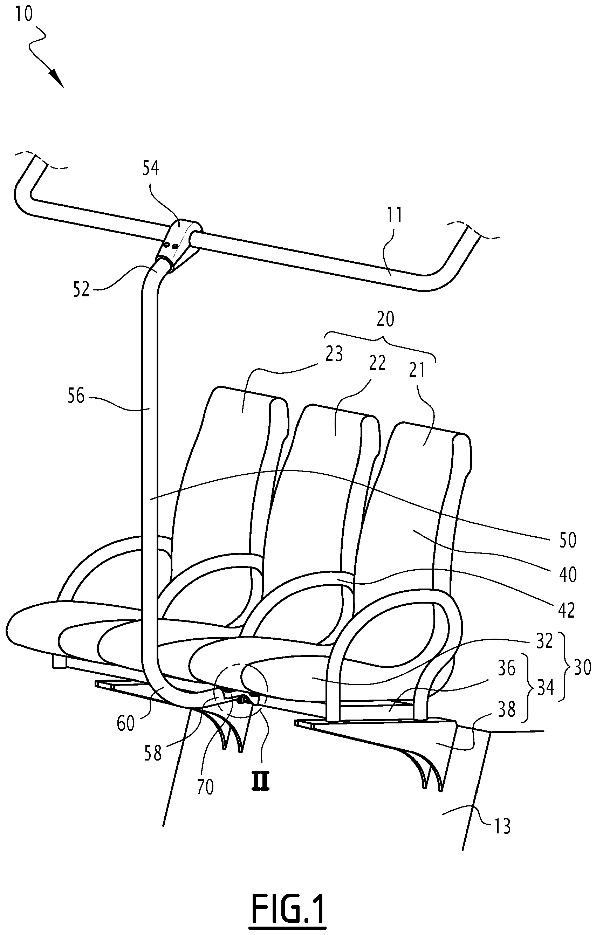

En d'autres termes, dans l'exemple représenté aux figures 1 et 2, le tronçon horizontal de la barre de maintien est fixé à l'extrémité avant de l'accoudoir par l'intermédiaire de l'attache commune de liaison 70.

Grâce aux moyens d'attache 74 et au logement 76 d'une part et à la patte 78 et aux moyens de fixation 80 d'autre part, l'attache commune de liaison 70 permet de fixer de manière indépendante l'extrémité avant 44 de l'accoudoir 42 et le tronçon horizontal 58 de la barre de maintien 50 au support 34. Ainsi, l'attache permet de fixer uniquement l'accoudoir 42, dans une configuration du siège 21 où la présence d'une barre de maintien 50 n'est pas souhaitée, ou de fixer uniquement la barre de maintien, dans une configuration du siège où la présence d'un accoudoir n'est pas souhaitée. Dans une configuration sans accoudoir, la face d'appui 72 est directement en contact avec le support 34.

De plus, le tronçon horizontal de la barre de maintien et l'extrémité avant de l'accoudoir peuvent être démontés de l'attache commune de liaison, et l'attache commune de liaison peut être démontée du support. Par démontable, on entend que la barre de maintien, l'accoudoir et l'attache commune de liaison peuvent être désassemblés de manière non-destructive à la main ou à l'aide d'outils. En d'autres termes, la barre de maintien, l'accoudoir et la pièce commune de liaison peuvent être installés de manière réversible. En pratique, le démontage de l'attache commune de liaison s'effectue en retirant les moyens d'attache 74 puis en séparant l'attache commune de liaison du support 34 ; le démontage de l'accoudoir s'effectue simultanément au démontage de l'attache commune de liaison, ce qui permet de dégager l'extrémité avant de l'accoudoir du logement 76 ; et le démontage de la barre de maintien s'effectue en retirant les moyens de fixation 80, ce qui permet de retirer la patte 78 du méplat 62.

L'attache commune de liaison permet donc une grande modularité en autorisant l'installation de différentes configurations de sièges 21, 22 et 23 : sur une rangée de siège 20, il n'est pas toujours souhaitable d'installer un accoudoir ou une barre de maintien sur chaque siège, et le siège décrit ici permet de facilement et rapidement installer ou démonter une barre de maintien ou un accoudoir, sans modification des autres pièces du siège.

La fixation du tronçon horizontal de la barre de maintien sous l'assise 30 permet de réduire l'encombrement au niveau du plancher du véhicule 10, ce qui facilite son nettoyage et libère de la place au niveau des pieds des passagers tout en supprimant les problèmes d'étanchéité au niveau de la fixation au plancher.

Le support 34 étant situé sous le niveau de l'assise 30, l'attache commune de liaison 70 n'est pas facilement visible par un passager assis sur le siège 21 ou debout à proximité de ce siège, ce qui est esthétique.

Dans l'exemple, les sièges 22 et 23 sont identiques au siège 21, mis à part qu'ils ne comprennent pas de barre de maintien 50.

En variante non-représentée de l'invention, la rangée de sièges 20 comprend un nombre de sièges différents de trois.

En variante non-représentée de l'invention, le tronçon horizontal 58 présente aussi une composante verticale, c'est-à-dire qu'il est oblique et définit avec le tronçon vertical principal 56 un angle différent de 90°.

En variante non-représentée de l'invention, les bras de maintien 38 permettent de fixer la traverse 36 au sol du véhicule 1.

En variante non-représentée de l'invention, l'extrémité avant 44 de l'accoudoir 42 est fixée au coussin 32 du siège 21, sous le niveau du coussin.

En variante non-représentée de l'invention, le tronçon horizontal 58 de la barre de maintien 50 est directement fixé à l'extrémité avant 44 de l'accoudoir 42, qui comporte une patte de fixation similaire à la patte 78. Dans cette variante, l'attache commune de liaison 70 est remplacée par une attache de fixation de l'extrémité avant de l'accoudoir sur le support 34 ou bien l'extrémité avant de l'accoudoir est fixée directement sur le support 34, par exemple à l'aide d'un ou plusieurs boulons.

En variante non-représentée de l'invention, l'attache commune de liaison comporte un nombre de moyens d'attache 74 différent de deux, par exemple un ou quatre, et un nombre de moyens de fixation 80 différent de deux, par exemple un ou quatre.

## Revendications

1. Siège (21) pour véhicule (10) de transport de passagers comprenant une assise (30), un dossier (40) placé au-dessus de l'assise, au moins un accoudoir (42) et au moins une barre de maintien (50), dans lequel l'accoudoir (42) est fixé à l'assise (30) depuis une extrémité avant (44) sous le niveau de l'assise et dans lequel la barre de maintien (50) est fixée à l'assise (30) depuis une extrémité de liaison à l'assise (58) sous le niveau de l'assise, **caractérisé en ce que** le siège (21) comprend une attache commune de liaison (70) qui fixe à l'assise (30) indépendamment, d'une part, l'extrémité avant (44) de l'accoudoir (42) et, d'autre part, l'extrémité de liaison à l'assise (58) de la barre de maintien (50).

2. Siège (21) selon la revendication 1, **caractérisé en ce que** l'extrémité de liaison à l'assise (58) de la barre de maintien (50) et l'accoudoir (42) sont en outre fixés l'un à l'autre de manière réversible.

3. Siège (21) selon l'une quelconque des revendications précédentes, **caractérisé en ce que** l'attache commune de liaison (70) forme une bride reliée à l'assise (30) de manière démontable, et **en ce que** l'extrémité avant (44) de l'accoudoir (42) est enserrée entre la bride (70) et l'assise (30).

4. Siège (21) selon l'une quelconque des revendications précédentes, **caractérisé en ce que** le siège (21) comporte des moyens (80) de fixation de l'extrémité de liaison à l'assise (58) de la barre de maintien (50) sur l'attache commune de liaison (70) de manière démontable.

5. Siège (21) selon la revendication 4, **caractérisé en ce que** l'extrémité de liaison à l'assise (58) de la barre de maintien (50) et l'attache commune de liaison (70) sont percées d'au moins un trou dans lequel sont engagés les moyens (80) de fixation.

6. Siège (21) selon l'une quelconque des revendication précédentes, **caractérisé en ce que** l'extrémité de liaison à l'assise (58) de la barre de maintien (50) comprend un méplat (62) sur lequel est positionné une patte (78) de l'attache commune de liaison (70).

7. Siège (21) selon l'une quelconque des revendications précédentes, **caractérisé en ce que** l'attache commune de liaison (70) est fixée à l'assise (30) de manière réversible.

8. Siège (21) selon l'une quelconque des revendications précédentes, **caractérisé en ce que** :
- l'assise (30) du siège (21) comprend un coussin (32) et un support (34) ;
- le coussin (32) est fixé sur le support (34) et au-dessus de celui-ci ;
- l'accoudoir (42) est fixé au support (34) sous le coussin (32) ; et
- l'extrémité de liaison à l'assise (58) de la barre de maintien (50) est fixée au support (34) sous le coussin (32).

9. Véhicule de transport de passagers (10), comprenant au moins un siège (21) selon l'une des revendications 1 à 8.

## Patentansprüche

1. Sitz (21) für ein Fahrzeug (10) zum Transport von Passagieren, umfassend eine Sitzfläche (30), eine Rückenlehne (40), die über der Sitzfläche angeordnet ist, mindestens eine Armlehne (42) und mindestens eine Haltestange (50), wobei die Armlehne (42) an der Sitzfläche (30) von einem vorderen Ende (44) unterhalb der Ebene des Sitzes aus befestigt ist und wobei die Haltestange (50) von einem Sitzverbindungsende (58) unterhalb der Ebene des Sitzes an der Sitzfläche (30) befestigt ist, **dadurch gekennzeichnet, dass** der Sitz (21) einen gemeinsamen Verbindungsaufhänger (70) umfasst, der unabhängig einerseits das vordere Ende (44) der Armlehne (42) und andererseits das Sitzverbindungsende (58) der Haltestange (50) an der Sitzfläche (30) befestigt.

2. Sitz (21) nach Anspruch 1, **dadurch gekennzeichnet, dass** das Sitzverbindungsende (58) der Haltestange (50) und die Armlehne (42) zusätzlich reversibel aneinander befestigt sind.

3. Sitz (21) nach einem der vorherigen Ansprüche, **dadurch gekennzeichnet, dass** der gemeinsame Verbindungsaufhänger (70) einen Flansch bildet, der abnehmbar mit der Sitzfläche (30) verbunden ist, und dass das vordere Ende (44) der Armlehne (42) zwischen dem Verbindungsaufhänger (70) und der Sitzfläche (30) eingeklemmt ist.

4. Sitz (21) nach einem der vorherigen Ansprüche, **dadurch gekennzeichnet, dass** der Sitz (21) Einrichtungen (80) umfasst, um das Sitzverbindungsende (58) der Haltestange (50) abnehmbar an dem gemeinsamen Verbindungsaufhänger (70) zu befestigen.

5. Sitz (21) nach Anspruch 4, **dadurch gekennzeichnet, dass** das Sitzverbindungsende (58) der Haltestange (50) und der gemeinsame Verbindungsaufhänger (70) von mindestens einem Loch durchbohrt sind, in das die Befestigungseinrichtungen (80) eingreifen.

6. Sitz (21) nach einem der vorherigen Ansprüche, **dadurch gekennzeichnet, dass** das Sitzverbindungsende (58) der Haltestange (50) eine Abflachung (62) umfasst, auf der eine Lasche (78) des gemeinsamen Verbindungsaufhängers (70) positioniert ist.

7. Sitz (21) nach einem der vorherigen Ansprüche, **dadurch gekennzeichnet, dass** der gemeinsame Verbindungsaufhänger (70) reversibel an der Sitzfläche (30) befestigt ist.

8. Sitz (21) nach einem der vorherigen Ansprüche, **dadurch gekennzeichnet, dass**:
- die Sitzfläche (30) des Sitzes (21) ein Polster (32) und eine Halterung (34) umfasst;
- das Kissen (32) an der Halterung (34) und darüber befestigt ist;
- die Armlehne (42) an der Halterung (34) unter dem Polster (32) befestigt ist;
und
- das Sitzverbindungsende (58) der Haltestange (50) an der Halterung (34) unter dem Polster (32) befestigt ist.

9. Schienenfahrzeug (10), umfassend mindestens einen Sitz (21) nach einem der Ansprüche 1 bis 8.

## Claims

1. A seat (21) for a passenger transport vehicle (10) comprising a squab (30), a backrest (40) placed above the squab, at least one armrest (42) and at least one handrail (50), wherein the armrest (42) is attached to the squab (30) from a front end (44) below the level of the squab and wherein the handrail (50) is attached to the squab (30) from a squab-connecting end (58) below the level of the squab, **characterised in that** the seat (21) comprises a common connecting bracket (70) which independently attaches to the squab (30) the front end (44) of the armrest (42) on the one hand and the squab-connecting end (58) of the handrail (50) on the other hand.

2. The seat (21) as claimed in claim 1, **characterized in that** the squab-connecting end (58) of the handrail (50) and the armrest (42) are furthermore attached to one another in a reversible manner.

3. The seat (21) as claimed in any one of the preceding claims, **characterized in that** the common connecting bracket (70) forms a flange which is detachably connected to the squab (30), and wherein the front end (44) of the armrest (42) is clamped between the flange (70) and the squab (30).

4. The seat (21) as claimed in any one of the preceding claims, **characterized in that** the seat (21) comprises means (80) for attaching the squab-connecting end (58) of the handrail (50) to the common connecting bracket (70) in a reversible manner.

5. The seat (21) as claimed in claim 4, **characterized in that** the squab-connecting end (58) of the handrail (50) and the common connecting bracket (70) are drilled with at least one hole in which the fastening means (80) are engaged.

6. The seat (21) as claimed in any one of the preceding claims, **characterized in that** the squab-connecting end (58) of the handrail (50) comprises a flat area (62) on which a tab (78) of the common connecting bracket (70) is positioned.

7. The seat (21) as claimed in any one of the preceding claims, **characterized in that** the common connecting bracket (70) is attached to the seat (30) in a reversible manner.

8. The seat (21) as claimed in any one of the preceding claims, **characterized in that**:
- the squab (30) of the seat (21) comprises a cushion (32) and a support (34);
- the cushion (32) is attached to the support (34) and above it;
- the armrest (42) is attached to the support (34) below the cushion (32); and
- the squab-connecting end (58) of the handrail (50) is attached to the support (34) below the cushion (32).

9. A passenger transport vehicle (10) comprising at least one seat (21) as claimed in any one of claims 1 to 8.
